# EUROPEAN PATENT APPLICATION

(11) **EP 2 018 083 A1**
(43) Date of publication of application: **21.01.2009**
(21) Application number: 07012009.2
(22) Date of filing: 19.06.2007
(51) Int. Cl.: H04W 36/14, H04W 12/06

(54) **Method and device for performing a handover and communication system comprising such device**

(71) Applicant: Nokia Siemens Networks Oy, 02610 Espoo (FI)
(72) Inventor: Changhong, Li, 02140 Espoo (FI); Punz, Gottfried, 1080 Wien (AT); Wolfner, Gyorgy, 1144 Budapest (HU)
(74) Representative: Bruglachner, Thomas E.

(57) **Abstract**

A method and a device are provided for performing a handover of a first instance from a first network to a second network, the method comprising the steps of (a) the first instance initiates a pre-authentication with a second instance; (b) the second instance performs a pre-authentication with the second network; and (c) the first instance initiates the handover.

## Description

The invention relates to a method and to a device for performing a handover and a communication system comprising such a device.

According to document 3GPP TS 23.402 V1.0.0 (2007-05), the mobility management procedures specified to handle mobility between 3GPP and non 3GPP accesses shall include mechanisms to minimize the handover latency due to authentication and authorization for network access. This applies to User Equipments (UEs) either supporting simultaneous radio transmission capability or not supporting it.

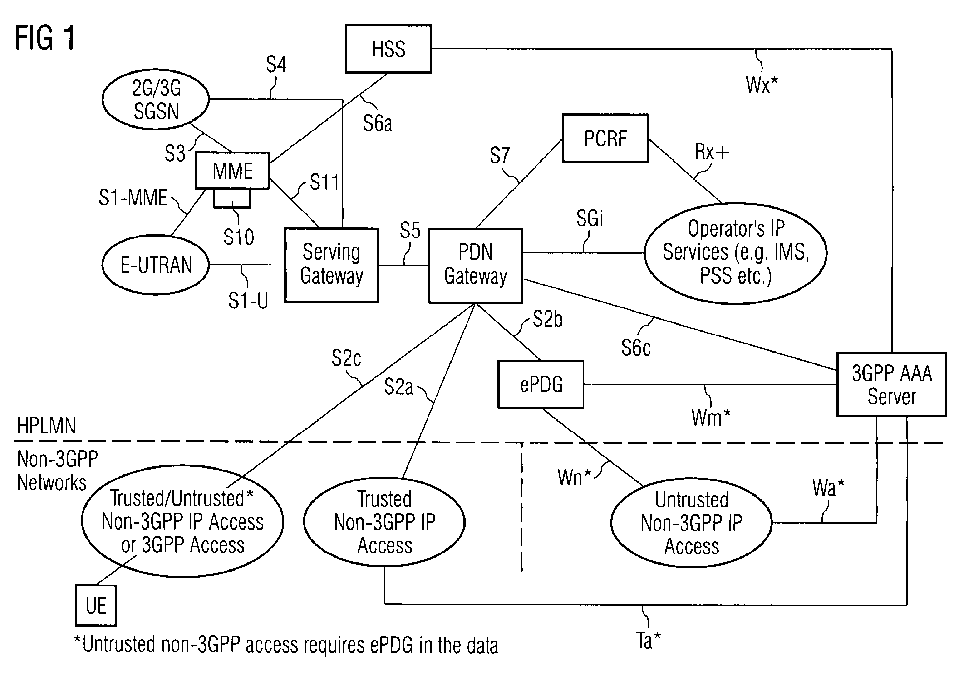

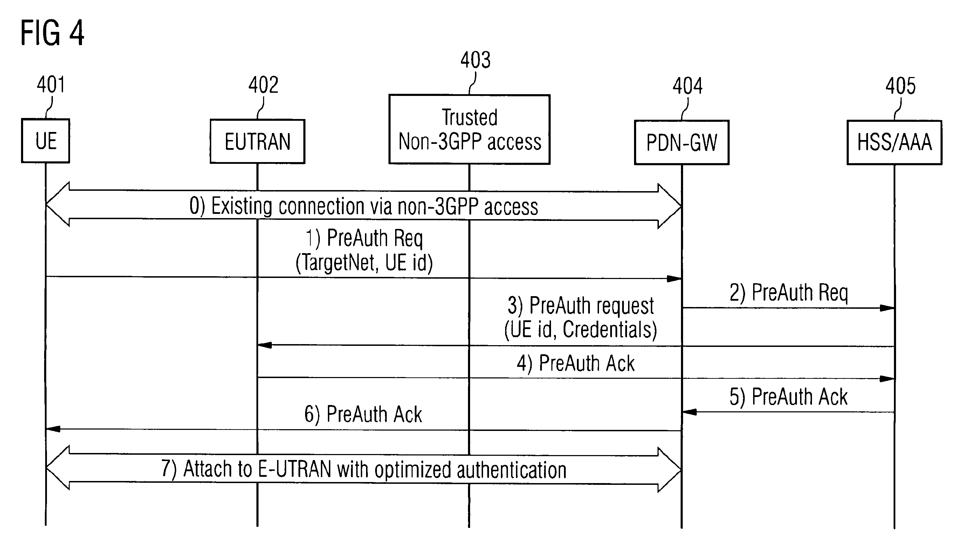

**Fig.1** corresponds to Fig.4.2.1-1 of 3GPP TS 23.402 visualizing a non-roaming architecture for non-3GPP accesses within an Evolved Packet System (EPS).

For a detailed description of Fig.1 reference is made to 3GPP TS 23.402, in particular in combination with the documents as cited therein.

Some of the reference points as shown in Fig.1 can be summarized as follows:

| | |
|---|---|
| S2a: | It provides the user plane with related control and |
| | mobility support between trusted non 3GPP IP access |
| | and a Gateway. |
| S2b: | It provides the user plane with related control and |
| | mobility support between an Evolved Packet Data |
| | Gateway (ePDG) and the Gateway. |
| S2c: | It provides the user plane with related control and |
| | mobility support between the UE and the Gateway. This |
| | reference point is implemented over trusted and/or |
| | untrusted non-3GPP Access and/or 3GPP access. |
| S5: | It provides user plane tunneling and tunnel management |
| | between a Serving Gateway and a Packet Data Network |
| | Gateway (PDN GW). It is used for Serving GW relocation |
| | due to UE mobility and in case the Serving GW needs to |
| | connect to a non collocated PDN GW for the required |
| | PDN connectivity. |
| S6a: | This interface is defined between a Mobility |
| | Management Entity (MME) and a Home Subscriber Server |
| | (HSS) for authentication and authorization. |
| S6c: | It is the reference point between the PDN Gateway in |
| | the HPLMN and a 3GPP AAA server for mobility related |
| | authentication, if needed. This reference point may |
| | also be used to retrieve and request storage of |
| | mobility parameters. |
| S7: | It provides transfer of (QoS) policy and charging |
| | rules from a PCRF to Policy and Charging Enforcement |
| | Point (PCEF). |
| SGi: | It is the reference point between the PDN Gateway and |
| | the packet data network. Packet data network may be an |
| | operator external public or private packet data |
| | network or an intra operator packet data network, e.g. |
| | for provision of IMS services. This reference point |
| | corresponds to Gi and Wi functionalities and supports |
| | any 3GPP and non-3GPP access systems. |
| Wa*: | It connects the Untrusted non-3GPP IP Access with the |
| | 3GPP AAA Server/Proxy and transports access |
| | authentication, authorization and charging-related |
| | information in a secure manner. |
| Ta* : | It connects the Trusted non-3GPP IP Access with the |
| | 3GPP AAA Server/Proxy and transports access |
| | authentication, authorization, mobility parameters and |
| | charging-related information in a secure manner. |
| Wm* : | This reference point is located between 3GPP AAA |
| | Server/Proxy and an Evolved Packet Data Gateway (ePDG) |
| | and is used for AAA signaling (transport of mobility |
| | parameters, tunnel authentication and authorization |
| | data). |
| Wn* : | This is the reference point between the Untrusted Non- |
| | 3GPP IP Access and the ePDG. Traffic on this interface |
| | for a UE initiated tunnel has to be forced towards |
| | ePDG. |
| Wx* : | This reference point is located between 3GPP AAA |
| | Server and HSS and is used for transport of |
| | authentication data. |

An approach to minimize handover latency for the target network access is to change the architecture as shown in Fig.1 and to provide new interfaces, e.g., between the Mobility Management Entity (MME) and the AAA-Server.

Such solution, however, disadvantageously leads to a tight interworking structure comprising complex interfaces with different security mechanism to cope with.

The **problem** to be solved is to overcome the disadvantages as stated before and to provide an approach that allows improved handover latency in particular in combination with existing 3GPP architecture.

This problem is solved according to the features of the independent claims. Further embodiments result from the depending claims.

In order to overcome this problem, a method for performing a handover of a first instance from a first network to a second network comprising the following steps:
(a) the first instance initiates a pre-authentication with a second instance;
(b) the second instance performs a pre-authentication with the second network;
(c) the first instance initiates the handover.

It is to be noted that networks as referred to herein may also or in particular refer to access networks.

Hence, prior to executing an actual handover, the first instance (e.g., a user equipment UE) may initiate the pre-authentication. Such pre-authentication can in particular be performed for the second network via an existing connection, in particular between the first instance and the second network by additional signaling.

Regarding pre-authentication mechanisms signaling may preferably be enabled towards the target access network. This can be regarded as an indirect AAA signaling connection from the source access network to the target access network. However, such signaling can be processed in particular via the backend, i.e. via the HSS/3GPP AAA server.

This approach allows a significant reduction of a handover latency.

In an embodiment, based on steps (a) and (b) as set forth above, the first instance and the second network are provided with credentials that are required for an optimized, in particular local authentication.

In another embodiment, in a step (d) the first instance attaches to the second network utilizing an optimized authentication.

In a further embodiment, at least one layer-2 parameter and/or at least one IP level configuration parameter is conveyed to the first instance prior to step (c).

Such provision of parameters allows an enhancement of this approach.

In a next embodiment, the approach presented comprises the following steps prior to step (a):
- the first instance determines a deterioration of the connection to the first network;
- the first instance scans for further connections;
- the first instance requests a handover to the second network.

The connection as mentioned may in particular be a radio connection.

Hence, the first instance may recognize, e.g. a deterioration of a signal strength to the first network and thus it may initiate a handover to the second network that has been passively scanned by said first instance.

However, the first instance may also be attached to fixed access networks. In this case, a "deterioration of the connection" and a "scanning" mentioned above can be seen as the first instance detecting that a handover to the other access network should be made.

It is also an embodiment that the pre-authentication with the second instance is performed via a gateway. Such gateway may in particular be a Packet Data Network Gateway PDN-GW.

Pursuant to another embodiment, the first instance initiates the pre-authentication with the second instance by transmitting a pre-authentication request message in particular comprising an identifier of the second network and/or an identifier of the first instance.

Hence, the second network once identified as a target to the handover, can be addressed by such pre-authentication request message. As an option, the identifier of the first instance (e.g., an ID of a user equipment) can be conveyed to either the second instance or to the gateway, which preferably forwards a pre-authentication request message to the second instance.

According to an embodiment, the second instance performs the pre-authentication with the second network by transmitting a pre-authentication request message in particular comprising an identifier of the first instance.

Such pre-authentication request message conveyed by the second instance may be acknowledged by the second network. A further acknowledgement may then be forwarded (directly or indirectly via said gateway) to the first instance.

Depending on the concrete authentication method in place for the second network, these messages may be extended to an authentication dialogue.

In a next embodiment, the first instance is of the following type:
- a user equipment;
- a mobile terminal;
- a mobile computer;
- a mobile network element.

The first instance may in particular be the user equipment (UE) initiating the handover as described herein.

It is also an embodiment that the first network and/or the second network is of the following type:
- a WiMAX network;
- an I-WLAN network;
- a 3GPP access network;
- in general a trusted non-3GPP access network;
- in general a non-trusted non-3GPP access network.

Pursuant to another embodiment, the first network and the second network are of different type.

Hence, different possibilities of connections between (non) 3GPP access networks (trusted or non-trusted) can occur.

In yet another embodiment, the second instance is of the following type:
- an authentication, authorization and accounting server (AAA Server);
- a home subscriber server (HSS).

The problem as stated above is also solved by a device for data processing comprising a processor unit that is arranged and/or equipped such that the method as described herein is executable on said processor unit.

Furthermore, the problem stated above can be solved by a device for initiating a handover of a first instance from a first network to a second network comprising a processor unit that is arranged such that the method as described herein can be run on said processor unit.

Moreover, the problem as stated supra is solved by a device for initiating a handover of a first instance from a first network to a second network comprising:
- a first unit for receiving a pre-authentication request;
- a second unit for initiating an authentication with the second network;
- a third unit for sending a confirmation to the first instance.

It is to be noted that said first, second and third units may be functional entities that can be realized in various ways, i.e. as one or several block(s) of hardware and/or as one or several pieces of software running on one or more devices.

According to an embodiment, the device is
- an authentication, authorization and accounting server and/or
- a home subscriber server.

The problem stated above is also solved by a communication system comprising the device as described herein.

Embodiments of the invention are shown and illustrated in the following figures:
- Fig.2: shows a message sequence chart illustrating a concept of pre-authentication prior to executing a handover from a first network to a second network;
- Fig.3: shows a message sequence chart illustrating a handover from a 3GPP access network to a trusted non-3GPP access network;
- Fig.4: shows a message sequence chart illustration of a handover from a trusted non-3GPP access network to a E-UTRAN;
- Fig.5: shows a message sequence chart illustration of a handover from a 3GPP access network to a non-trusted non-3GPP access network;
- Fig.6: shows a device for initiating an authentication that can in particular be utilized for initiating a handover.

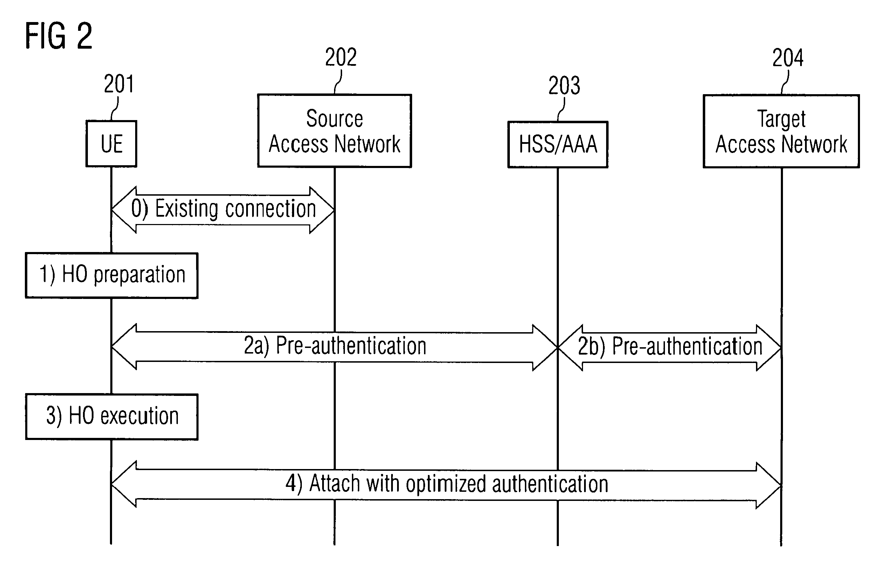

**Fig.2** shows a message sequence chart illustrating the approach provided herewith in particular concerning a concept of pre-authentication prior to executing a handover from a first network to a second network.

In Fig.2 there are shown a User Equipment UE 201 (corresponding to a first instance), a Source Access Network 202 (corresponding to a first network), a Home Subscriber Server and/or an Authentication, Authorization and Accounting Server HSS/AAA 203 (corresponding to a second instance) and a Target Access Network 204 (corresponding to a second network).

A solution to avoid tight-interworking during handover may be based on the fact that a mobile node (e.g., a user equipment) performs an authentication for the new (target) access network prior to the actual handover, while still being connected to the current access network.

The message flows indicated in Fig.2 can be described as follows:
0) The User Equipment UE 201 has an existing connection to the Source Access Network 202.
1) The User Equipment UE 201 detects that a handover is expected, e.g., due to a deterioration of its signal strength to the Source Access Network 202.
   Before or after this step the User Equipment UE 201 shall be able to discover the Target Access Network 204.
2) Before the actual execution of the handover, the User Equipment UE 201 initiates a pre-authentication.
   A pre-authentication is performed for the Target Access Network 204 via an existing connection over the Source Target network.
   As a result, both the User Equipment UE 201 and the Target Access Network 204 may have the credentials required for an optimized authentication.
3) The User Equipment UE 201 initiates the handover.
4) The User Equipment UE 201 can attach to the Target Access Network 204 utilizing an optimized authentication, i.e., the time needed for such handover is not increased by the time required for the authentication via a backend AAA infrastructure.

In a single radio case, the User Equipment UE 201 stops the connection to the Source Access Network 202 at step 3).

An option to this approach is that in addition to the authentication parameters as provided, some layer-2 and/or IP-level configuration parameters are also delivered to the User Equipment UE 201. In such case, the handover delay can be further reduced as not only a delay due to AAA procedures is minimized.

One significant advantage of the approach provided herewith is its reduction of the handover delay based on authentication schemes. Another advantage is that it does not require any additional interfaces between 3GPP and non-3GPP access networks.

It is to be noted that hereinafter "Access" may also refer to an access network or to an access node.

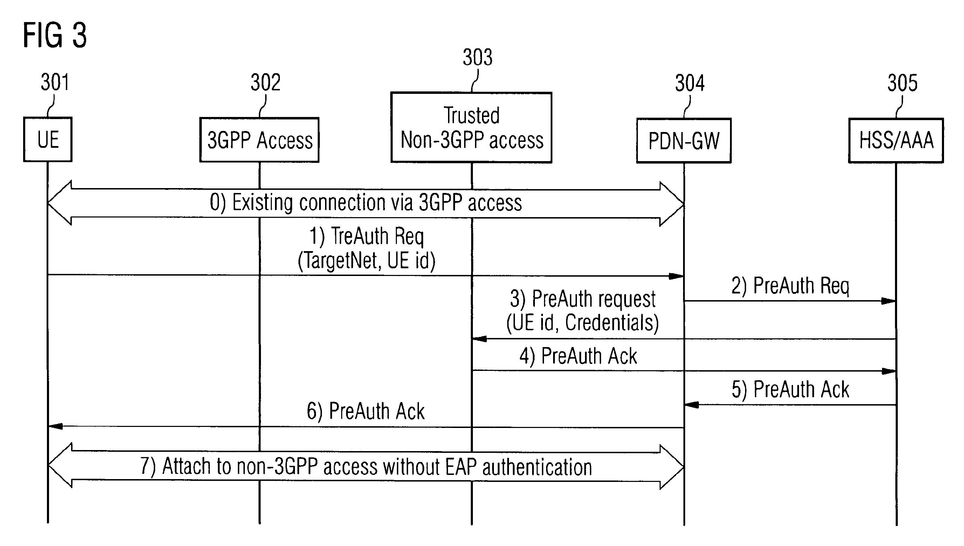

**Fig.3** shows a message sequence chart illustration of the approach provided herewith concerning a handover from a 3GPP access network to a trusted non-3GPP access network.

Fig.3 comprises a User Equipment UE 301, a 3GPP Access 302, a Trusted Non-3GPP Access 303, a PDN-GW 304 (Packet Data Network Gateway) and a HSS/AAA 305 (i.e., a Home Subscriber Server and/or an Authentication, Authorization and Accounting Server) .

The message flows indicated in Fig.3 can be described as follows, where an EAP authentication method is assumed as the one applicable for the target access network:
0) The User Equipment UE 301 has a connection to the PDN-GW 304 via the 3GPP Access 302.
1) After having discovered the non-3GPP Access Network 303, the User Equipment UE 301 sends a pre-authentication request to the PDN-GW 304:
   PreAuth Req (TargetNet, UE id)
   This message comprises a layer-2 identifier "UE id" of the User Equipment UE 301 used in the target system and a unique identifier "TargetNet" of the target network.
2) The PDN-GW 304 forwards this pre-authentication request to the HSS/AAA 305.
3) Based on the identifier "TargetNet" of the target network the HSS/AAA 305 sends a pre-authentication request
   PreAuth Req (UE id, Credentials)
   to the authenticator in the target access network.
   Such message may preferably comprise a UE identifier and an information that would be a result of a successful EAP authentication and authorization.
4-5-6) The User Equipment UE 301 receives back a pre-authentication acknowledge
   PreAuth Ack
   comprising information received as a result of an EAP authentication. These messages may be extended to an authentication dialogue.
7) The User Equipment UE 301 associates on layer-2 with the non-3GPP access and performs an attachment without EAP using the information as received in step 6) .
   Hence, the handover can be started with an allocation of a local IP address within the target network.
   Note, in case of single radio, the User Equipment UE 301 shall disconnect from the 3GPP Access 302 prior to this step.

**Fig.4** shows a message sequence chart illustration of the approach provided herewith concerning a handover from a trusted non-3GPP access network to a E-UTRAN.

Fig.4 comprises a User Equipment UE 401, an E-UTRAN 402, a Trusted Non-3GPP Access 403, a PDN-GW 404 and a HSS/AAA 405.

The message flows indicated in Fig.4 can be described as follows:
0) The User Equipment UE 401 has a connection to the PDN-GW 404 via the trusted non-3GPP Access 403.
1) After having discovered the E-UTRAN 402, the User Equipment UE 401 sends a pre-authentication request to the PDN-GW 404:
   PreAuth (TargetNet, UE id)
   This messages comprises an identifier "UE id" of the User Equipment UE 401 used in the 3GPP system and a unique identifier "TargetNet" of the target network.
2) The PDN-GW 404 forwards this pre-authentication request to the HSS/AAA 405.
3) Based on the identifier "TargetNet" of the target network the HSS/AAA 405 selects a Mobility Management Entity MME in 3GPP access and sends a pre-authentication request
   PreAuth request (UE id, Credentials)
   to the selected MME in target 3GPP Access (here: the E-UTRAN 402).
   This message may comprise security parameters required within the E-UTRAN 402 in order to identify and to authenticate the User Equipment UE 401.
4-5-6) The User Equipment UE 401 receives back a pre-authentication acknowledge
   PreAuth Ack
   which comprises all information that would be received as a result of an authentication in the 3GPP access network. These messages may be extended to an authentication dialogue.
7) The User Equipment UE 401 performs an attachment to the E-UTRAN 402.
   The authentication of the User Equipment UE 401 is based on the parameters received in previous steps, i.e., in particular no interaction of the HSS/AAA 405 is required.
   Note that the User Equipment UE 401 may advantageously provide the selected MME identifier (P-TMSI) and a NodeB should not select a new MME. Hence, the attachment procedure can be deemed similar to a case when the User Equipment UE 401 attaches to a network to which it has been attached previously.
   In case of single radio, the User Equipment UE 401 shall disconnect from the trusted non-3GPP access 403 prior this step.

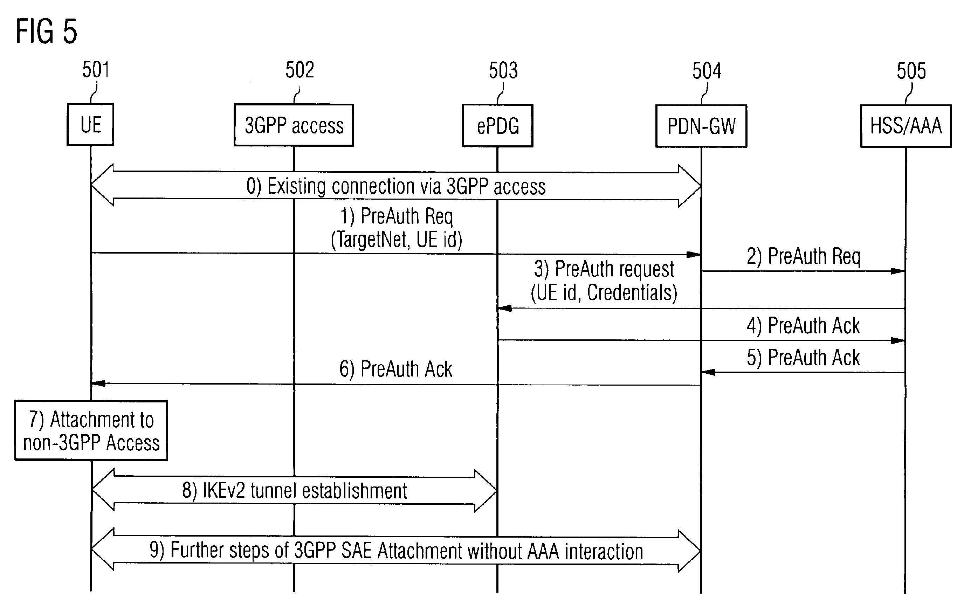

**Fig.5** shows a message sequence chart illustration of the approach provided herewith concerning a handover from a 3GPP access network to a non-trusted non-3GPP access network. The basic mechanism of IPSec tunnel authentication is assumed according to 3GPP TS 33.234, based on EAP signaling over IKEv2.

Fig.5 comprises a User Equipment UE 501, a 3GPP Access 502, an Evolved Packet Data Gateway ePDG 503, a PDN-GW 504 and a HSS/AAA 505.

The message flows indicated in Fig.5 can be described as follows:
0) The User Equipment UE 501 has a connection to the PDN-GW 504 via the 3GPP Access 502.
1) After having discovered the target network, the User Equipment UE 501 sends a pre-authentication request to the PDN-GW 504:
   PreAuth (TargetNet, UE id)
   This messages comprises an identifier "UE id" of the User Equipment UE 501 used in the 3GPP system and a unique identifier "TargetNet" of the target network.
2) The PDN-GW 504 forwards this pre-authentication request to the HSS/ AAA 505.
3) Based on the identifier "TargetNet" of the target network the HSS/AAA 505 selects the ePDG 503 and sends a pre-authentication request
   PreAuth Req (UE id, Credentials)
   to the ePDG 503.
   Such message may preferably comprise a UE identifier and an information that allows fast IKEv2 tunnel establishment (e.g., by using MOBIKE), and all information needed that allows the attachment without further HSS/AAA interaction.
   If the non-Trusted Access requires 3GPP based authentication then the HSS/AAA 505 may also contact the authenticating entity in the non-3GPP Access network as it is described in the scenario "handover from 3GPP Access to Trusted Non-3GPP Access".
4-5-6) The User Equipment UE 501 receives back a pre-authentication acknowledge
   PreAuth Ack
   which includes all information that is required for fast IKEv2 tunnel establishment in particular including a selected ePDG IP address. These messages may be extended to an authentication dialogue.
7) The User Equipment UE 501 associates on layer-2 with the non-3GPP access and performs the attachment to the Non-Trusted Non-3GPP Access network.
   The EAP-based 3GPP authentication can be avoided similar to the Trusted Non-3GPP Access scenario.
   In case of single radio only, the User Equipment UE 501 shall disconnect from the 3GPP access prior to this step.
8) The User Equipment UE 501 and the ePDG 503 perform an IKEv2 update (the previously received IP address is from now on used for tunneling purposes).
   The ePDG selection is not performed in a way it would be performed in case of a normal attachment.
9) An attachment to a SAE network (here, to the PDN-GW 504) is processed without any further AAA interaction, since all information and elements required have yet been received from the AAA/HSS 505.

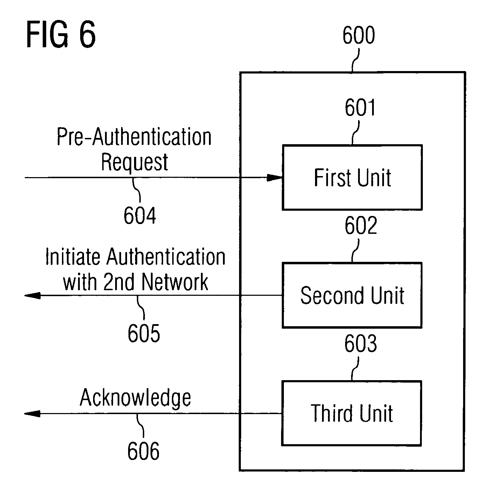

**Fig.6** shows a device 600 for initiating an authentication that can in particular be utilized for initiating a handover.

Such a device 600 may in particular be an authentication, authorization and accounting server (AAA Server) and/or a home subscriber server (HSS).

The device 600 comprises a First Unit 601 for receiving a Pre-Authentication Request 604 and a Second Unit 602 for initiating an authentication with the second network. It further comprises a Third Unit 603 for sending a confirmation 606 in particular to the first instance thereby acknowledging the pre-authentication request 604.

It is to be noted that the communication from the device 600 to the first instance can be processed directly or indirectly via a gateway, in particular via a PDN-GW. The first instance may further be a mobile node, in particular a user equipment UE.

It is to be noted that this approach may be utilized in the field of 3GPP Release 8. In particular user equipments and/or core network elements can make use of this approach.

As an option, non-3GPP systems such as CDMA and/or WiMAX may be supported by the approach as presented herewith.

### Abbreviations (in alphabetical order):

- AAA: Authentication, Authorization and Accounting
- EAP: Extensible Authentication Protocol
- EAP-AKA: EAP for UMTS Authentication and Key Agreement
- ePDG: Evolved Packet Data Gateway
- EPS: Evolved Packet System
- E-UTRAN: Evolved UTRAN
- GW: Gateway
- HPLMN: Home Public Land Mobile Network
- HSS: Home Subscriber Server
- IP: Internet Protocol
- I-WLAN: Interworking WLAN
- MME: Mobility Management Entity
- PCEF: Policy and Charging Enforcement Function
- PCRF: Policy Control and Charging Rules Function
- PDN: Packet Data Network
- UE: User Equipment
- UTRAN: Universal Terrestrial Radio Access Network
- WiMAX: Worldwide Interoperability for Microwave Access
- WLAN: Wireless Area Network

## Claims

1. A method for performing a handover of a first instance from a first network to a second network comprising the following steps:
(a) the first instance initiates a pre-authentication with a second instance;
(b) the second instance performs a pre-authentication with the second network;
(c) the first instance initiates the handover.

2. The method according to claim 1, wherein the pre-authentication performed by the second instance is performed via an existing connection, in particular between the first instance and the second network.

3. The method according to any of the preceding claims, wherein based on the steps (a) and (b) the first instance and the second network are provided with credentials that are required for an optimized authentication.

4. The method according to any of the preceding claims comprising a step:
(d) the first instance attaches to the second network utilizing an optimized authentication.

5. The method according to any of the preceding claims, wherein at least one layer-2 parameter and/or at least one IP level configuration parameter is conveyed to the first instance prior to step (c).

6. The method according to any of the preceding claims comprising the following steps prior to step (a):
- the first instance determines a deterioration of the connection to the first network;
- the first instance scans for further connections;
- the first instance requests a handover to the second network.

7. The method according to any of the preceding claims, wherein the pre-authentication with the second instance is performed via a gateway.

8. The method according to claim 7, wherein the gateway is a Packet Data Network Gateway PDN-GW.

9. The method according to any of the preceding claims, wherein the first instance initiates the pre-authentication with the second instance by transmitting a pre-authentication request message in particular comprising an identifier of the second network and/or an identifier of the first instance.

10. The method according to any of the preceding claims, wherein the second instance performs the pre-authentication with the second network by transmitting a pre-authentication request message in particular comprising an identifier of the first instance.

11. The method according to any of the preceding claims, wherein the first instance is of the following type:
- a user equipment;
- a mobile terminal;
- a mobile computer;
- a mobile network element.

12. The method according to any of the preceding claims, wherein the first network and/or the second network is of the following type:
- a WiMAX network;
- an I-WLAN network;
- a 3GPP access network;
- in general a trusted non-3GPP access network;
- in general a non-trusted non-3GPP access network.

13. The method according to any of the preceding claims, wherein the second instance is of the following type:
- an authentication, authorization and accounting server (AAA server);
- a home subscriber server (HSS).

14. The method according to any of the preceding claims, wherein the first network and the second network are of different type.

15. A device for data processing comprising a processor unit that is arranged such that the method according of any of the preceding claims is executable on said processor unit.

16. A device for initiating a handover of a first instance from a first network to a second network comprising a processor unit that is arranged such that the method according to any of the claims 1 to 14 can be run on said processor unit.

17. A device for initiating a handover of a first instance from a first network to a second network comprising:
- a first unit for receiving a pre-authentication request;
- a second unit for initiating an authentication with the second network;
- a third unit for sending a confirmation to the first instance.

18. The device according to any of claims 15 to 17, said device is
- an authentication, authorization and accounting server and/or
- a home subscriber server.

19. Communication system comprising the device according to any of claims 15 to 18.
